# FASCICULE DE BREVET EUROPEEN

(11) **EP 2 228 195 B1**
(45) Date de publication et mention de la délivrance du brevet: **23.08.2017**
(21) Numéro de dépôt: 10156261.9
(22) Date de dépôt: 11.03.2010
(51) Int. Cl.: B29C 45/33, B29C 45/44, A61J 9/00

(54) **Procédé de fabrication d'une pièce tubulaire allongée en matière synthétique et moule utilisé lors de la mise en oeuvre de ce procédé**
Verfahren zur Herstellung eines lang gezogenen rohrförmigen Stücks aus Kunststoff, und zur Durchführung dieses Verfahrens eingesetzte Gussform
Method for manufacturing an elongated tubular part in a synthetic material and mould used during the implementation of said method

(30) Priorité: 13.03.2009 FR 0901153
(43) Date de publication de la demande: 15.09.2010
(73) Titulaire: Plastifal, 01250 Corveissiat (FR)
(72) Inventeur: Didienne, Roland, 01100 Groissiat (FR)
(74) Mandataire: Jeannet, Olivier

(56) Documents cités:
- WO-A-2005/041851
- DE-A1- 1 925 674
- DE-C1- 4 318 014
- FR-A- 1 066 799

## Description

La présente invention concerne un procédé de fabrication d'une pièce tubulaire allongée en matière synthétique et un moule utilisé lors de la mise en oeuvre de ce procédé. La pièce tubulaire allongée concernée est en particulier un corps de biberon.

Pour remédier aux inconvénients bien connus des biberons en verre (coût de fabrication, poids, risque de bris), il a été conçu depuis plusieurs décennies de réaliser des biberons en matière synthétique, particulièrement en polycarbonates, par des techniques d'injection-soufflage.

Il apparaît cependant que les polycarbonates ont pour inconvénient de contenir une substance, le bisphénol A, dont la diffusion dans le lait donné à un nourrisson n'est pas souhaitable.

Il existe donc un besoin de réaliser des biberons en une matière synthétique autre qu'en un polycarbonate. Il existe également un besoin de réaliser des biberons présentant un aspect visuel très proche de celui des biberons classiques, ce qui est essentiel à l'attractivité commerciale de ce type de produit. Il existe en outre un besoin de fabriquer des biberons tels que mentionnés ci-dessus, comprenant un goulot fileté à une extrémité et/ou comprenant un fond vissable.

La présente invention a pour but de répondre à ces besoins.

Le document N° DE 43 18 014 décrit un procédé pour fabriquer des pièces tubulaires, notamment des pièces tubulaires en matière plastique, comprenant les étapes consistant à :
- utiliser un moule comprenant :
   (i) un corps de moule définissant une cavité sensiblement tubulaire à la forme de la face extérieure de la pièce tubulaire à obtenir ;
   (ii) un contre-moule comprenant un mandrin à la forme de la face intérieure de la pièce tubulaire à obtenir, ce contre-moule étant mobile par rapport au corps de moule entre une position de moulage, dans laquelle il est engagé dans ladite cavité, et une position de démoulage, dans laquelle il est extrait de cette cavité ;
   (iii) des premiers moyens de maintien d'une première extrémité longitudinale d'une pièce tubulaire moulée entre ledit corps de moule et ledit contre-moule, ces premiers moyens de maintien étant mobiles entre une position de maintien de cette première extrémité longitudinale et une position de libération de cette même extrémité longitudinale ; lesdits premiers moyens de maintien sont situés au niveau de l'extrémité longitudinale de la cavité dont le contre-moule s'éloigne lorsque ce contre-moule quitte ladite position de moulage pour se déplacer vers ladite position de démoulage ;
- mouler ladite pièce tubulaire par injection d'une matière synthétique entre ledit corps de moule et ledit contre-moule ;
- amener lesdits premiers moyens de maintien en position de maintien de ladite première extrémité longitudinale de la pièce tubulaire.

Dans ce procédé, le mandrin recule dans un premier temps puis la pièce moulée est tirée par la partie de moule comportant les premiers moyens de maintien, cette traction réalisant l'essentiel du démoulage de la pièce ; le mandrin avance ensuite pour réaliser le démoulage final de la pièce.

Le document FR 1 066 799 a en enseignement similaire, mais sans recul du mandrin.

Les documents DE 19 25 674 et WO 2005/041851 décrivent d'autres procédés de moulage selon l'art antérieur.

Ces procédés ne sont pas appropriés au moulage d'un corps de biberon, et n'apportent pas de réponse satisfaisante aux besoins mentionnés plus haut.

L'objectif principal de l'invention est donc de fournir un procédé de fabrication d'un corps de biberon, ou autre pièce tubulaire allongée, qui permette d'obtenir des corps de biberon en une matière synthétique autre qu'en polycarbonates.

Un autre objectif de l'invention est de fournir un procédé qui permette d'obtenir des corps de biberon conservant un aspect visuel restant proche de celui des biberons classiques, à savoir (i) ayant une section tubulaire sensiblement constante, en d'autres termes présentant un angle de dépouille très faible, inférieur à 3 %, et (ii) ne présentant pas de plan de joint.

Un objectif supplémentaire de l'invention est de permettre l'obtention d'un corps de biberon comprenant des filetages à ses deux extrémités pour recevoir, sur une extrémité, une bague de montage d'une tétine, et, sur son autre extrémité, un fond vissable.

Le procédé qu'elle concerne comprend les étapes consistant à :
- utiliser un moule comprenant :
   (i) un corps de moule définissant une cavité sensiblement tubulaire à la forme de la face extérieure de la pièce tubulaire à obtenir ;
   (ii) un contre-moule comprenant un mandrin à la forme de la face intérieure de la pièce tubulaire à obtenir, ce contre-moule étant mobile par rapport au corps de moule entre une position de moulage, dans laquelle il est engagé dans ladite cavité, et une position de démoulage, dans laquelle il est extrait de cette cavité ;
   (iii) des premiers moyens de maintien d'une première extrémité longitudinale d'une pièce tubulaire moulée entre ledit corps de moule et ledit contre-moule, ces premiers moyens de maintien étant mobiles entre une position de maintien de cette première extrémité longitudinale et une position de libération de cette même extrémité longitudinale ; lesdits premiers moyens de maintien sont situés au niveau de l'extrémité longitudinale de la cavité dont le contre-moule s'éloigne lorsque ce contre-moule quitte ladite position de moulage pour se déplacer vers ladite position de démoulage ;
- mouler ladite pièce tubulaire par injection d'une matière synthétique entre ledit corps de moule et ledit contre-moule ;
- dans la mesure où lesdits premiers moyens de maintien ne seraient pas en position de maintien lors de l'opération de moulage, amener ces premiers moyens de maintien en position de maintien de ladite première extrémité longitudinale de la pièce tubulaire.

Le procédé selon l'invention est caractérisé en ce qu'il comprend les étapes consistant à :
- opérer un premier déplacement du contre-moule en direction de sa position de démoulage, en déplaçant ce contre-moule sur une course correspondant à environ la moitié de la longueur de la pièce tubulaire ;
- amener lesdits premiers moyens de maintien dans ladite position de libération, et
- opérer un deuxième déplacement du contre-moule jusqu'à ladite position de démoulage.

Il est apparu que les matières synthétiques utilisables pour la fabrication d'un biberon, autres que les polycarbonates, notamment les polypropylènes, polyéthersulfones, polyamides, ou PETG, ne permettaient pas l'obtention de corps de biberon satisfaisants avec la mise en oeuvre d'une technique classique d'injection-soufflage.

Il a alors été conçu d'utiliser une pure technique d'injection entre un corps de moule et un contre-moule tels que précités, bien qu'une telle technique apparaisse a *priori* ne pas être utilisable pour la fabrication d'une pièce tubulaire à faible ou très faible angle de dépouille, compte tenu de la rétraction de la matière moulée sur le contre-moule après moulage et donc du risque d'entraînement de cette matière par ce contre-moule lors du mouvement de celui-ci vers sa position de démoulage. En effet, la rétraction de la matière moulée provoque une liaison plus ou moins importante de cette matière avec le contre-moule, de laquelle il résulte le risque d'entraînement de cette matière par le contre-moule, avec pour effet une compression axiale de la matière de la paroi de la pièce lors dudit mouvement, voire une involution de cette matière à l'intérieur de la pièce.

L'invention a alors consisté à imaginer des premiers moyens de maintien, par rapport au corps de moule, de ladite première extrémité longitudinale de la pièce, c'est-à-dire de l'extrémité dont le contre-moule s'éloigne lorsqu'il quitte la position de moulage pour se déplacer vers sa position de démoulage. Grâce à ce maintien, le risque précité de compression axiale ou d'involution de la paroi de la pièce lors de ce mouvement est éliminé.

Le procédé selon l'invention permet ainsi de fabriquer un corps de biberon en une matière synthétique autre qu'un polycarbonate, et ayant un aspect visuel proche de celui de biberons existants, c'est-à-dire ayant un très faible angle de dépouille, inférieur à 3 %, et en ne présentant pas de plan de joint.

Le procédé peut également comprendre les étapes consistant à :
- aménager lesdits premiers moyens de maintien de telle sorte qu'ils forment, en position de maintien, des parties de moulage de ladite première extrémité de la pièce tubulaire ; et
- lors du moulage de la pièce, et alors que ces premiers moyens de maintien sont en position de maintien, injecter de la matière synthétique entre lesdites parties de moulage de manière à mouler ladite première extrémité.

Lesdits moyens de maintien sont ainsi mis à profit pour aménager une partie de la pièce tubulaire allongée à obtenir.

Dans ce cas, avantageusement :
- lesdits premiers moyens de maintien sont sous forme d'au moins deux pièces mobiles radialement par rapport à l'axe de la pièce tubulaire à obtenir, entre lesdites positions de maintien et de libération ;
- lesdites parties de moulage de ces pièces mobiles sont aménagées de telle sorte qu'elles permettent conjointement, en position de maintien, de mouler ladite première extrémité longitudinale avec un filetage.

Le procédé selon l'invention permet ainsi, simultanément au maintien de cette première extrémité lors du mouvement du contre-moule, d'aménager un filetage sur cette extrémité longitudinale. Le procédé permet dès lors d'aménager facilement un biberon pourvu d'au moins un filetage. La pièce tubulaire peut comprendre deux extrémités ouvertes. Le procédé selon l'invention comprend les étapes consistant à :
- utiliser un moule comprenant des deuxièmes moyens de maintien, situés au niveau de la deuxième extrémité longitudinale de la pièce tubulaire à obtenir, opposée à ladite première extrémité longitudinale, ces deuxièmes moyens de maintien étant mobiles entre une position de maintien de cette deuxième extrémité longitudinale et une position de libération de cette même extrémité longitudinale ;
- maintenir les premiers et deuxièmes moyens de maintien en position de maintien et opérer le premier déplacement du contre-moule ;
- amener lesdits premiers moyens de maintien en position de libération ;
- opérer un déplacement de la pièce tubulaire allongée par rapport au corps de moule de manière à libérer cette pièce tubulaire allongée de la cavité du corps de moule ;
- amener lesdits deuxièmes moyens de maintien en position de libération, et
- opérer ledit deuxième déplacement du contre-moule de manière à libérer la pièce tubulaire allongée, ainsi moulée, par rapport au contre-moule.

Dans ce cas de deuxièmes moyens de maintien, et lorsqu'il s'agit de fabriquer un corps de biberon comprenant deux extrémités longitudinales ouvertes et filetées, dont une est destinée à recevoir une bague de montage d'une tétine et l'autre un fond vissable, lesdits deuxièmes moyens de maintien comprennent au moins deux pièces mobiles radialement telles que précitées, ayant des parties de moulage permettant de mouler ladite deuxième extrémité longitudinale avec un filetage.

Le moule utilisé comprend, quant à lui, de manière connue en soi :
(i) un corps de moule définissant une cavité à la forme de la face extérieure de la pièce tubulaire à obtenir ;
(ii) un contre-moule comprenant un mandrin à la forme de la face intérieure de la pièce tubulaire à obtenir, ce contre-moule étant mobile par rapport au corps de moule entre une position de moulage, dans laquelle il est engagé dans ladite cavité, et une position de démoulage, dans laquelle il est extrait de cette cavité ; et
(iii) des premiers moyens de maintien d'une première extrémité longitudinale d'une pièce tubulaire moulée entre ledit corps de moule et ledit contre-moule, ces premiers moyens de maintien étant mobiles entre une position de maintien de cette première extrémité longitudinale et une position de libération de cette même extrémité longitudinale ; lesdits premiers moyens de maintien sont situés au niveau de l'extrémité de la cavité dont le contre-moule s'éloigne lorsqu'il quitte ladite position de moulage pour se déplacer vers ladite position de démoulage ;
(iv) des moyens de déplacement desdits premiers moyens de maintien entre lesdites positions de maintien et de libération, et
(v) des moyens de déplacement du contre-moule par rapport au corps de moule, permettant d'opérer un premier déplacement du contre-moule en direction de sa position de démoulage, en déplaçant ce contre-moule sur une course correspondant à environ la moitié de la longueur de la pièce tubulaire, puis, après que lesdits premiers moyens de maintien aient été amenés dans ladite position de libération, d'opérer un deuxième déplacement du contre-moule jusqu'à ladite position de démoulage.

Selon l'invention, le moule comprend :
(i) des deuxièmes moyens de maintien, situés au niveau de la deuxième extrémité longitudinale de la pièce tubulaire à obtenir, opposée à ladite première extrémité longitudinale, ces deuxièmes moyens de maintien étant mobiles entre une position de maintien de cette deuxième extrémité longitudinale et une position de libération de cette même extrémité longitudinale, et
(ii) des moyens de déplacement desdits deuxièmes moyens de maintien entre lesdites positions de maintien et de libération.

Lesdits deuxièmes moyens de maintien peuvent être sous forme d'au moins deux pièces mobiles radialement par rapport à l'axe de la pièce tubulaire à obtenir, entre lesdites positions de maintien et de libération, comprenant des parties de moulage aménagées de telle sorte qu'elles permettent conjointement, en position de maintien desdites pièces mobiles, de mouler ladite deuxième extrémité longitudinale avec un filetage.

Lesdits premiers moyens de maintien peuvent être aménagés de telle sorte qu'ils forment, en position de maintien, des parties de moulage de ladite première extrémité de la pièce tubulaire.

Avantageusement, dans ce cas,
- lesdits premiers moyens de maintien sont sous forme d'au moins deux pièces mobiles radialement par rapport à l'axe de la pièce tubulaire à obtenir, entre lesdites positions de maintien et de libération ;
- lesdites parties de moulage de ces pièces mobiles sont aménagées de telle sorte qu'elles permettent conjointement, en position de maintien, de mouler ladite première extrémité longitudinale avec un filetage.

L'invention sera bien comprise, et d'autres caractéristiques et avantages de celle-ci apparaîtront, en référence au dessin schématique annexé, représentant, à titre d'exemples non limitatifs, une forme de réalisation du moule qu'elle concerne.
La figure 1 est une vue de ce moule et d'un corps de biberon que ce moule permet d'obtenir, en section passant par l'axe longitudinal du corps de biberon, le moule étant en position fermée ; et
les figures 2 à 5 sont des vues du moule similaires à la figure 1, au cours de quatre phases successives du démoulage du corps de biberon, la figure 5 étant une vue de complète ouverture du moule, permettant l'éjection du corps de biberon moulé.

Les figures représentent un moule 1 utilisé lors de la mise en oeuvre d'un procédé de fabrication d'un corps de biberon 100.

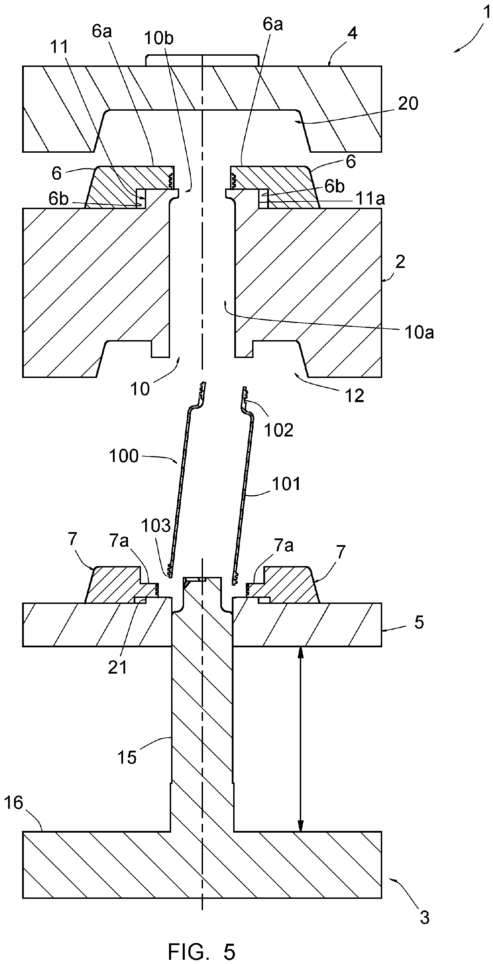

Ainsi que le montre plus particulièrement la figure 5, le corps de biberon 100 comprend une partie principale 101 formant le récipient de lait, un goulot fileté 102 relié à une première extrémité longitudinale de cette partie principale, et un filetage sur la face extérieure de la paroi de cette partie principale 101, au niveau de l'extrémité longitudinale 103 de la partie 101 opposée au goulot 102. Cette extrémité longitudinale opposée 103 est ouverte. Le goulot fileté 102 est destiné à recevoir une bague de montage d'une tétine, et ladite extrémité longitudinale opposée 103 est destinée à recevoir un fond vissable.

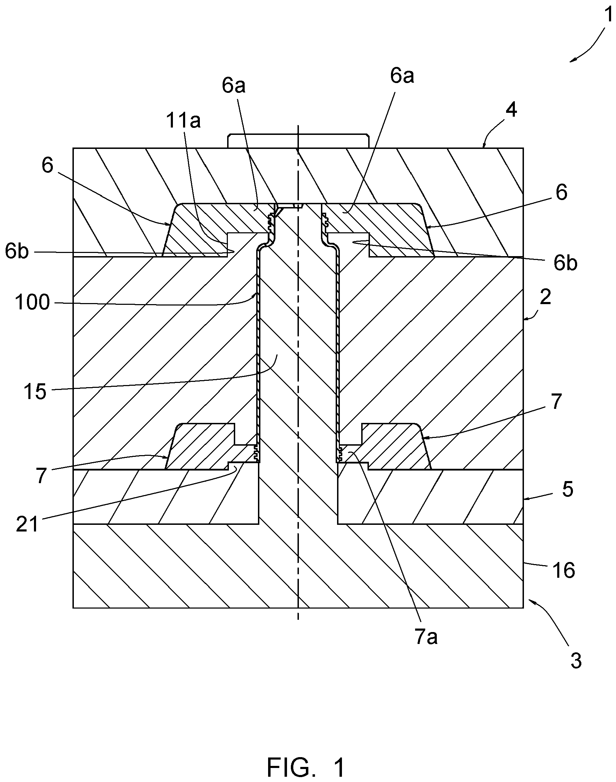

En référence aux figures 1 et 5 plus particulièrement, il apparaît que le moule 1 comprend un corps de moule 2, un contre-moule 3, une plaque supérieure 4, une plaque intermédiaire 5 située entre le corps de moule 2 et le contre-moule 3, des premières pièces mobiles 6 et des deuxièmes pièces mobiles 7.

Le corps de moule 2 définit une cavité 10 sensiblement tubulaire, à la forme de la face extérieure du corps de biberon 100 à obtenir. Dans l'exemple représenté, cette cavité 10 comprend une portion principale 10a d'aménagement de ladite partie principale 101 et une portion rétrécie supérieure 10b destinée à aménager un épaulement de raccordement de cette partie principale 101 au goulot fileté 102.

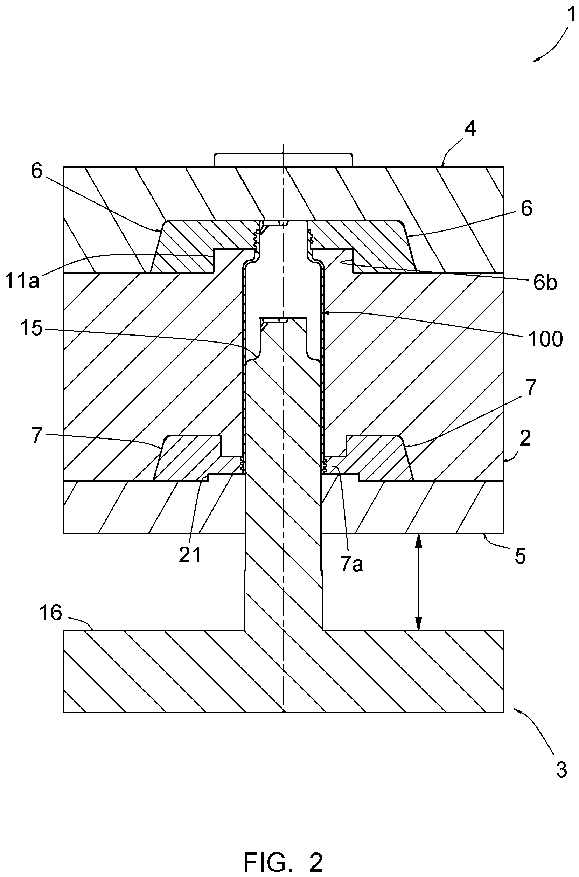

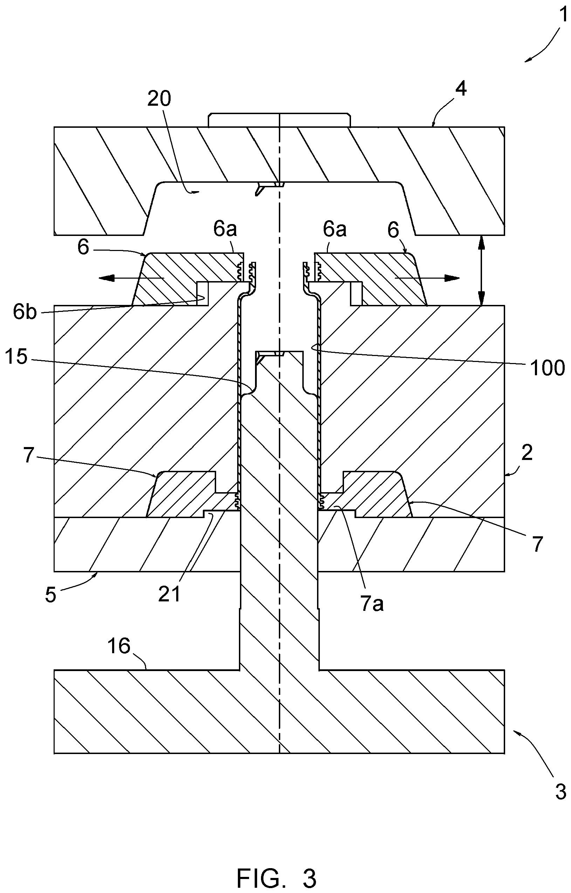

Au niveau de sa face supérieure, le corps de moule 2 comprend une portion 11 en saillie, définissant une face périphérique de butée 11a. Le corps de moule 2 reçoit, sur cette face supérieure, lesdites premières pièces mobiles 6, lesquelles sont mobiles sur cette face, radialement par rapport à l'axe longitudinal de la cavité 10, entre la position de moulage/maintien visible sur les figures 1 et 2 et une position de libération visible sur les figures 3 à 5.

Au niveau de sa face inférieure, le corps de moule 2 comprend un logement 12 de réception ajustée des deuxièmes pièces mobiles 7.

Le contre-moule 3 comprend un mandrin 15 et une plaque de base 16, avec laquelle le mandrin 15 forme corps. Le mandrin 15 est à la forme de la face intérieure du corps de biberon 100 à obtenir, c'est-à-dire comprend une portion principale destinée à aménager la face intérieure de ladite partie principale 101, une portion rétrécie supérieure destinée à aménager la face intérieure du goulot 102, et une portion intermédiaire destinée à aménager la face intérieure de l'épaulement de raccordement de ces partie principale 101 et goulot 102.

Comme cela apparaît par comparaison des figures 1 et 5, le contre-moule 3 est mobile par rapport au corps de moule 2 entre une position de moulage, montrée sur la figure 1, dans laquelle il est engagé dans ladite cavité 10, et une position de démoulage, montré sur la figure 5, dans laquelle il est suffisamment extrait de cette cavité 10 pour permettre le démoulage du corps de biberon 100.

La plaque supérieure 4 comprend un logement 20 propre à recevoir de manière ajustée lesdites premières pièces mobiles 6 lorsque ces dernières sont en position de moulage/maintien. Cette plaque supérieure 4 est mobile entre une position de contact avec le corps de moule 2 (cf. figure 1) et une position d'écartement de ce corps de moule 2 (cf. figures 3 à 5) ; dans sa position de contact, elle maintient les premières pièces mobiles 6 dans ladite position de moulage/maintien ; dans sa position d'écartement, elle ne fait pas obstacle au mouvement de ces pièces 6 en position de libération.

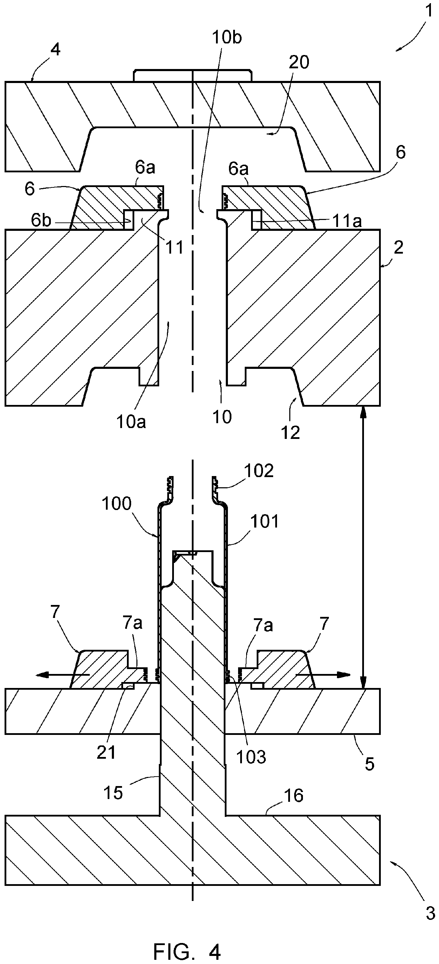

La plaque intermédiaire 5 comprend un alésage central ajusté au mandrin 15, au travers duquel ce mandrin 15 coulisse lors de son mouvement entre ses positions de moulage et de démoulage. Au niveau de sa face supérieure, elle comprend une portion 21 en saillie définissant une face périphérique de butée, et reçoit lesdites deuxièmes pièces mobiles 7, lesquelles sont mobiles sur cette face, radialement par rapport à l'axe longitudinal de la cavité 10, entre la position de moulage/maintien visible sur les figures 1 à 3 et une position de libération visible sur les figures 4 et 5.

Cette plaque intermédiaire 5 est mobile entre une position de contact avec le corps de moule 2 (cf. figures 1 à 3) et une position d'écartement de ce corps de moule 2 (cf. figures 4 et 5) ; dans sa position de contact, elle maintient les deuxièmes pièces mobiles 7 dans ladite position de moulage/maintien ; dans sa position d'écartement, elle ne fait pas obstacle au mouvement de ces pièces 7 en position de libération.

Les premières pièces mobiles 6 comprennent des évidements inférieurs définissant des parties de moulage supérieures 6a et des faces de butée 6b. Ladite position de moulage/maintien de ces pièces 6 est définie par la venue en butée des faces 6b contre ladite face périphérique de butée 11a ; dans cette position, les parties de moulage supérieures 6a permettent de mouler le goulot 102 avec un filetage extérieur, grâce à des empreintes appropriées qu'elles comprennent (cf. figure 1) ; ces parties de moulage 6a permettent également d'assurer un maintien de ce goulot 102 lors d'un recul du contre-moule 3 par rapport au corps de moule 2 (cf. figure 2) ; dans leur position de libération (cf. figures 3 à 5), ces pièces 6 permettent de libérer le goulot 102 en vue du démoulage du corps de biberon 100.

De manière similaire, les deuxièmes pièces mobiles 7 comprennent des évidements inférieurs définissant des parties de moulage supérieures 7a et des faces de butée inférieures. Ladite position de moulage/maintien de ces pièces 7 est définie par la venue en butée de ces faces de butée inférieures contre ladite face périphérique de butée de la portion 21 de la plaque 5 ; dans cette position, les parties de moulage supérieures 7a permettent de mouler le filetage de l'extrémité 103, grâce à des empreintes appropriées qu'elles comprennent (cf. figure 1) ; ces parties de moulage 7a permettent également d'assurer un maintien de cette extrémité 103 lors d'un mouvement de l'ensemble contre-moule 3 / plaque intermédiaire 5 par rapport au corps de moule 2 de manière à libérer la corps de biberon 100 de la cavité 10 (cf. figure 4) ; dans leur position de libération (cf. figures 4 et 5), ces pièces 7 permettent de libérer l'extrémité 103 en vue du démoulage du corps de biberon 100.

Le moule 1 permet la mise en oeuvre d'un procédé de fabrication du corps de biberon 100 comprenant les étapes suivantes :
- amener les différentes parties du moule 1 dans la position de moulage montré sur la figure 1 ;
- mouler le corps de biberon 100 par injection d'une matière synthétique entre le corps de moule 2, le contre-moule, les pièces 6 et les pièces 7 ;
- maintenir les pièces 6 et les pièces 7 en position de moulage/maintien et opérer un premier déplacement du contre-moule 3 en direction de sa position de démoulage, sur une course correspondant à environ la moitié de la longueur du corps de biberon 100 (cf. figure 2) ;

- écarter la plaque supérieure 4 du corps de moule 2 et amener les pièces 6 en position de libération (cf. figure 3) ;
- écarter la plaque inférieure 5 du corps de moule 2 de manière à extraire le corps de biberon 100 de la cavité du corps de moule puis amener les pièces 7 en position de libération (cf. figure 3) ; et
- opérer un deuxième déplacement du contre-moule 3 par rapport au corps de moule 2 de manière à libérer le corps de biberon 100, ainsi moulé, par rapport au contre-moule 3 (cf. figure 5).

L'invention fournit ainsi un procédé de fabrication d'un corps de biberon 100, ou d'une autre pièce tubulaire allongée, en matière synthétique, et un moule de mise en oeuvre de ce procédé, présentant les avantages déterminants de permettre d'obtenir des corps de biberon en une matière synthétique autre qu'en polycarbonates, ces corps de biberon conservant un aspect visuel restant proche de celui des biberons classiques, à savoir (i) ayant une section tubulaire sensiblement constante, en d'autres termes présentant un angle de dépouille très faible, inférieur à 3 %, et (ii) ne présentant pas de plan de joint.

L'invention a été décrite ci-dessus en référence à une forme de réalisation donnée uniquement à titre d'exemple. Il va de soi qu'elle s'étend à toutes les autres formes de réalisations couvertes par les revendications ci-annexées.

## Revendications

1. Procédé de fabrication d'une pièce tubulaire allongée (100) en matière synthétique, comprenant les étapes consistant à :
- utiliser un moule (1) comprenant :
(i) un corps de moule (2) définissant une cavité (10) sensiblement tubulaire à la forme de la face extérieure de la pièce tubulaire (100) à obtenir ;
(ii) un contre-moule (3) comprenant un mandrin (15) à la forme de la face intérieure de la pièce tubulaire (100) à obtenir, ce contre-moule (3) étant mobile par rapport au corps de moule (2) entre une position de moulage, dans laquelle il est engagé dans ladite cavité (10), et une position de démoulage, dans laquelle il est extrait de cette cavité (10) ;
(iii) des premiers moyens (6) de maintien d'une première extrémité longitudinale (102) d'une pièce tubulaire (100) moulée entre ledit corps de moule (2) et ledit contre-moule (3), ces premiers moyens de maintien (6) étant mobiles entre une position de maintien de cette première extrémité longitudinale (102) et une position de libération de cette même extrémité longitudinale ; lesdits premiers moyens de maintien (6) sont situés au niveau de l'extrémité longitudinale de la cavité (10) dont le contre-moule (3) s'éloigne lorsque ce contre-moule (3) quitte ladite position de moulage pour se déplacer vers ladite position de démoulage ;
- mouler ladite pièce tubulaire (100) par injection d'une matière synthétique entre ledit corps de moule (2) et ledit contre-moule (3) ;
- dans la mesure où lesdits premiers moyens de maintien (6) ne seraient pas en position de maintien lors de l'opération de moulage, amener ces premiers moyens de maintien (6) en position de maintien de ladite première extrémité longitudinale (102) de la pièce tubulaire (100) ;
le procédée comprend les étapes consistant à :
- utiliser un moule (1) comprenant des deuxièmes moyens de maintien (7), situés au niveau de la deuxième extrémité longitudinale (103) de la pièce tubulaire (100) à obtenir, opposée à ladite première extrémité longitudinale (102), ces deuxièmes moyens de maintien (7) étant mobiles entre une position de maintien de cette deuxième extrémité longitudinale (103) et une position de libération de cette même extrémité longitudinale ;
- maintenir les premiers et deuxièmes moyens de maintien (6, 7) en position de maintien ;
- opérer un premier déplacement du contre-moule (3) en direction de sa position de démoulage, en déplaçant ce contre-moule (3) sur une course correspondant à environ la moitié de la longueur de la pièce tubulaire (100) ;
- amener lesdits premiers moyens de maintien (6) dans ladite position de libération ;
- opérer un déplacement de la pièce tubulaire allongée (100) par rapport au corps de moule (2) de manière à libérer cette pièce tubulaire allongée (100) de la cavité (10) du corps de moule (2) ;
- amener lesdits deuxièmes moyens de maintien (7) en position de libération, et
- opérer un deuxième déplacement du contre-moule (3) jusqu'à ladite position de démoulage, de manière à libérer la pièce tubulaire allongée (100), ainsi moulée, par rapport au contre-moule (3).

2. Procédé selon la revendication 1, **caractérisé en ce qu'**il comprend les étapes consistant à :
- aménager lesdits premiers moyens de maintien (6) de telle sorte qu'ils forment, en position de maintien, des parties (6a) de moulage de ladite première extrémité (102) de la pièce tubulaire (100) ; et
- lors du moulage de la pièce (100), et alors que ces premiers moyens de maintien (6) sont en position de maintien, injecter de la matière synthétique entre lesdites parties de moulage (6a) de manière à mouler ladite première extrémité (102).

3. Procédé selon la revendication 2, **caractérisé en ce que** :
- lesdits premiers moyens de maintien (6) sont sous forme d'au moins deux pièces (6) mobiles radialement par rapport à l'axe de la pièce tubulaire (100) à obtenir, entre lesdites positions de maintien et de libération ;
- lesdites parties de moulage (6a) de ces pièces mobiles sont aménagées de telle sorte qu'elles permettent conjointement, en position de maintien, de mouler ladite première extrémité longitudinale (102) avec un filetage.

4. Procédé selon l'une des revendications 1 à 3, **caractérisé en ce qu'**il comprend les étapes consistant à :
- lesdits deuxièmes moyens de maintien sont sous forme d'au moins deux pièces (7) mobiles radialement par rapport à l'axe de la pièce tubulaire (100) à obtenir, entre lesdites positions de maintien et de libération ;
- ces pièces mobiles (7) comprennent des parties (7a) de moulage de ladite deuxième extrémité longitudinale (103), aménagées de telle sorte qu'elles permettent conjointement, en position de maintien, de mouler ladite deuxième extrémité longitudinale (103) avec un filetage.

5. Moule (1) pour la mise en oeuvre du procédé selon l'une des revendications 1 à 4, comprenant :
(i) un corps de moule (2) définissant une cavité (10) à la forme de la face extérieure de la pièce tubulaire (100) à obtenir ;
(ii) un contre-moule (3) comprenant un mandrin (15) à la forme de la face intérieure de la pièce tubulaire (100) à obtenir, ce contre-moule (3) étant mobile par rapport au corps de moule (2) entre une position de moulage, dans laquelle il est engagé dans ladite cavité (10), et une position de démoulage, dans laquelle il est extrait de cette cavité (10) ; et
(iii) des premiers moyens (6) de maintien d'une première extrémité longitudinale (102) d'une pièce tubulaire (100) moulée entre ledit corps de moule (2) et ledit contre-moule (3), ces premiers moyens de maintien (6) étant mobiles entre une position de maintien de cette première extrémité longitudinale (102) et une position de libération de cette même extrémité longitudinale ; lesdits premiers moyens de maintien (6) sont situés au niveau de l'extrémité de la cavité (10) dont le contre-moule (3) s'éloigne lorsqu'il quitte ladite position de moulage pour se déplacer vers ladite position de démoulage ;
(iv) des moyens de déplacement desdits premiers moyens de maintien (6) entre lesdites positions de maintien et de libération, et
(v) des moyens de déplacement du contre-moule (3) par rapport au corps de moule (2), permettant d'opérer un premier déplacement du contre-moule (3) en direction de sa position de démoulage, en déplaçant ce contre-moule (3) sur une course correspondant à environ la moitié de la longueur de la pièce tubulaire (100), puis, après que lesdits premiers moyens de maintien (6) aient été amenés dans ladite position de libération, d'opérer un deuxième déplacement du contre-moule (3) jusqu'à ladite position de démoulage ;
**caractérisé en ce qu'**il comprend :
(i) des deuxièmes moyens de maintien (7), situés au niveau de la deuxième extrémité longitudinale (103) de la pièce tubulaire (100) à obtenir, opposée à ladite première extrémité longitudinale (102), ces deuxièmes moyens de maintien (7) étant mobiles entre une position de maintien de cette deuxième extrémité longitudinale (103) et une position de libération de cette même extrémité longitudinale, et
(ii) des moyens de déplacement desdits deuxièmes moyens de maintien (7) entre lesdites positions de maintien et de libération.

6. moule (1) selon la revendication 5, **caractérisé en ce que** lesdits deuxièmes moyens de maintien sont sous forme d'au moins deux pièces (7) mobiles radialement par rapport à l'axe de la pièce tubulaire (100) à obtenir, entre lesdites positions de maintien et de libération, et comprennent des parties de moulage (7a) aménagées de telle sorte qu'elles permettent conjointement, en position de maintien desdites pièces mobiles (7), de mouler ladite deuxième extrémité longitudinale (103) avec un filetage.

7. Moule (1) selon la revendication 5 ou la revendication 6, **caractérisé en ce que** lesdits premiers moyens de maintien (6) sont aménagés de telle sorte qu'ils forment, en position de maintien, des parties (6a) de moulage de ladite première extrémité (102) de la pièce tubulaire (100).

8. Moule (1) selon la revendication 7, **caractérisé en ce que** :
- lesdits premiers moyens de maintien sont sous forme d'au moins deux pièces (6) mobiles radialement par rapport à l'axe de la pièce tubulaire (100) à obtenir, entre lesdites positions de maintien et de libération ;
- lesdites parties de moulage (6a) de ces pièces mobiles (6) sont aménagées de telle sorte qu'elles permettent conjointement, en position de maintien, de mouler ladite première extrémité longitudinale (102) avec un filetage.

## Patentansprüche

1. Verfahren zur Herstellung eines langgestreckten rohrförmigen Teils (100) aus synthetischem Material, mit den Schritten:
- Verwendung einer Form (1) mit:
(i) einen Formkörper (2), der einen im wesentlichen rohrförmigen Hohlraum (10) mit der Form der Außenfläche des zu erhaltenden rohrförmigen Teils (100) definiert;
(ii) eine Gegenform (3), die einen Dorn (15) aufweist, der die Form der Innenfläche des zu erhaltenden Rohrabschnitts (100) aufweist, wobei diese Gegenform (3) bezüglich des Formkörpers bewegbar ist (2) zwischen einer Formposition, in der er in den Hohlraum (10) eingreift, und einer Entformungsposition, in der dieser Hohlraum (10) herausgeführt wird;
(iii) ersten Mittel (6) zum Aufrechterhalten eines ersten Längsende (102) eines zwischen dem Formkörper (2) und dem Gegenwerkzeug (3) geformten rohrförmigen Teils (100), wobei diesen ersten Haltemittel (6) beweglich sind zwischen einer Halteposition dieses ersten Längsende (102) und einer Position zum Lösen desselben Längsendes; Wobei die ersten Haltemittel (6) am Längsende des Hohlraums (10) angeordnet sind, von denen sich die Gegenform (3) wegbewegt, wenn die Gegenform (3) die Formposition verlässt, um sich in die Entformungsposition zu bewegen;
- Formen des rohrförmigen Teils (100) durch Einspritzen eines synthetischen Materials zwischen dem Formkörper (2) und dem Gegenform (3);
- wenn sich die ersten Haltemittel (6) während des Formvorgangs nicht in der Aufrechterhaltung befinden, bringen die erste Halteeinrichtung (6) in die Aufrechterhaltungsposition, um das erste Längsende (102) des rohrförmigen Teils (100) aufrechtzuerhalten;
Das Verfahren umfasst die Schritte:
- Verwendung einer Form (1) wobei zweiten Halteeinrichtungen (7) aufweisen, die an dem zweiten Längsende (103) des zu erhaltenden rohrförmigen Teils (100) gegenüber dem ersten Längsende (102) angeordnet ist, wobei diesen zweiten Halteeinrichtungen (7) zwischen einer Position zum Halten des zweiten Längsende (103) und einer Position zum Lösen dieses Längsende bewegbar sind;
- Aufrechterhalten den ersten und zweiten Halteeinrichtungen (6, 7) in der Aufrechterhaltungsposition;
- Bewegen der Gegenform (3) über eine erste Verschiebung in Richtung ihrer Entformungsposition durch Verschieben dieser Gegenform (3) über eine etwa die Hälfte der Länge des rohrförmigen Teils (100) entsprechende Bewegung;
- Bringen der ersten Halteeinrichtung (6) in die Freigabestellung;
- Bewegen des langgestreckten rohrförmigen Teils (100) relativ zum Formkörper (2), um das langgestreckte rohrförmige Teil (100) aus dem Hohlraum (10) des Formkörpers (2) freizugeben;
- die zweiten Haltemittel (7) in die Freigabestellung bringen und
- Bewegen der Gegenform (3) über eine zweite Verschiebung bis zu der Entformungsposition, um so den geformten langgestreckten rohrförmigen Teil (100) gegenüber der Gegenform (3) freizugeben.

2. Verfahren nach Anspruch 1, **dadurch gekennzeichnet, dass** es die folgenden Schritte umfasst:
- Ausbilden die ersten Halteeinrichtungen (6) derart, dass sie in der Aufrechterhaltungsposition Formteile (6a) des ersten Endes (102) des rohrförmigen Teils (100) bilden; und
- während des Formens des Teils (100), und während sich diese ersten Haltemittel (6) in der Aufrechterhaltung befinden, Einspritzen von synthetischem Material zwischen den Formteilen (6a), um das erste Ende (102) zu formen.

3. Verfahren nach Anspruch 2, **dadurch gekennzeichnet, dass**:
- die ersten Haltemittel (6) in Form von mindestens zwei radial zu der Achse des zu erhaltenden Rohrabschnittes (100) bewegbaren Teilen (6) zwischen den Halte- und Freigabepositionen ausgebildet sind;
- die Formteile (6a) dieser beweglichen Teile so angeordnet sind, dass sie in der Aufrechterhaltung gemeinsam das erste Längsende (102) mit einem Gewinde formen lassen.

4. Verfahren nach Anspruch 1, **dadurch gekennzeichnet, dass** es die folgenden Schritte umfasst:
- die zweiten Halteeinrichtungen in Form von mindestens zwei Teilen (7), die radial relativ zu der Achse des zu erhaltenden rohrförmigen Teils (100) zwischen den Halte-und Freigabepositionen bewegbar sind;
- diesen beweglichen Teile (7) mit Formteilen (7a) des zweiten Längsende (103), die so angeordnet sind, dass sie in der Aufrechterhaltung gemeinsam das zweite Längsende (103) mit einem Gewinde formen lassen.

5. Form (1) zur Durchführung des Verfahrens nach Anspruch 1, umfassend:
(i) einen Formkörper (2), der einen Hohlraum (10) in Form der Außenfläche des zu erhaltenden Rohrabschnitts (100) definiert;
(ii) eine Gegenform (3), die einen Dorn (15) aufweist, der die Form der Innenfläche des zu erhaltenden Rohrabschnitts (100) aufweist, wobei diese Gegenform (3) bezüglich des Formkörpers bewegbar ist (2) zwischen einer Formposition, in der sie in den Hohlraum (10) eingreift, und einer Entformungsposition, in der sie sich außerhalb dieses Hohlraums (10) befindet; und
(iii) ersten Mittel (6) zum Aufrechterhalten eines ersten Längsende (102) eines zwischen dem Formkörper (2) und dem Gegenwerkzeug (3) geformten rohrförmigen Teils (100), wobei diesen ersten Haltemittel (6) zwischen einer Halteposition dieses ersten Längsende (102) und einer Position zum Lösen desselben Längsendes beweglich sind; Die ersten Halteeinrichtungen (6) am Ende des Hohlraums (10) angeordnet sind, von der sich die Gegenform (3) beim Verlassen der Formposition wegbewegt, um sich in die Entformungsposition zu bewegen;
(iv) Einrichtungen zum Bewegen den ersten Halteeinrichtungen (6) zwischen den Halte- und Freigabepositionen und
(v) Mittel zum Bewegen der Gegenform (3) relativ zum Formkörper (2), wodurch es möglich ist, die Gegenform (3) über eine erste Bewegung in Richtung ihrer Entformungsposition zu bewegen, indem sie diesen Gegenform (3) bewegt über einen Weg, der etwa der Hälfte der Länge des rohrförmigen Teils (100) entspricht, und dann, nachdem die ersten Halteeinrichtungen (6) in die Freigabestellung gebracht worden sind, bewegt wird, wobei die Gegenform (3) über bewegt wird eine zweite Verschiebung bis zu der Entformungsposition;
**Dadurch gekennzeichnet, dass** sie umfasst:
(i) zweiten Haltemittel (7), die an dem zweiten Längsende (103) des zu erhaltenden rohrförmigen Teils (100) gegenüber dem ersten Längsende (102) angeordnet ist, wobei diese zweiten Haltemittel (7) zwischen eine Position zur Aufrechterhaltung dieses zweiten Längsende (103) und eine Position zum Lösen desselben Längsendes bewegbar sind, und
(ii) Einrichtungen zum Bewegen den zweiten Halteeinrichtungen (7) zwischen der Halte- und Freigabeposition.

6. Form nach Anspruch 5, **dadurch gekennzeichnet, dass** die zweiten Haltemittel in Form von mindestens zwei Teilen vorliegen, die radial relativ zu der Achse des zu erhaltenden Rohrstückes zwischen den Halte- und Freigabestellungen bewegbar sind und das Formteilen (7a) umfassen, die so angeordnet sind, dass sie in der Aufrechterhaltung der beweglichen Teile (7) gemeinsam das zweite Längsende (103) mit einem Gewinde formen lassen.

7. Formkörper (1) nach Anspruch 5 oder 6, **dadurch gekennzeichnet, dass** die ersten Haltemittel (6) so angeordnet sind, dass sie in der Aufrechterhaltungsposition Formteile (6a) zum Formen des ersten Endes (102) des rohrförmigen Teils (100) bilden angeordnet sind.

8. Form (1) nach Anspruch 7, **dadurch gekennzeichnet, dass**:
- die ersten Haltemittel in Form von mindestens zwei Teilen (6) vorliegen, die radial in Bezug auf die Achse des zu erhaltenden rohrförmigen Teils (100) zwischen den Halte- und Freigabepositionen bewegbar sind;
- die Formteile (6a) diesen beweglichen Teile (6) so angeordnet sind, dass sie in der Aufrechterhaltung gemeinsam das erste Längsende (102) mit einem Gewinde formen lassen.

## Claims

1. Method of manufacturing an elongated tubular part (100) of synthetic material, comprising the steps of:
- using a mold (1) comprising:
(i) a mold body (2) defining a substantially tubular cavity (10) having the shape of the outer surface of the tubular part (100) to be obtained;
(ii) a counter-mold (3) comprising a mandrel (15) having the shape of the inner surface of the tubular piece (100) to be obtained, this counter-mold (3) being movable with respect to the mold body (2) between a molding position, in which it is engaged in said cavity (10), and a demolding position, in which it is brought out this cavity (10);
(iii) first means (6) for maintaining a first longitudinal end (102) of a tubular part (100) molded between said mold body (2) and said counter-mold (3), this first maintaining means (6) being movable between a maintaining position of this first longitudinal end (102) and a position for releasing the same longitudinal end; said first maintaining means (6) are located at the longitudinal end of the cavity (10) of which the counter-mold (3) moves away when said counter-mold (3) leaves said molding position to move towards said demolding position;
- molding said tubular part (100) by injecting a synthetic material between said mold body (2) and said counter-mold (3);
- if said first maintaining means (6) are not in the maintaining position during the molding operation, bringing said first maintaining means (6) in the maintaining position for maintaining said first longitudinal end (102) of the tubular part (100);
the method comprises the steps of:
- using a mold (1) comprising second maintaining means (7) located at the second longitudinal end (103) of the tubular part (100) to be obtained, opposite to said first longitudinal end (102), this second maintaining means (7) being movable between a position for maintaining said second longitudinal end (103) and a position for releasing this longitudinal end;
- maintaining the first and second maintaining means (6, 7) in the maintaining position;
- moving the counter-mold (3) over a first displacement in the direction of its demolding position, by displacing this counter-mold (3) over a travel corresponding to approximately half the length of the tubular part (100);
- bringing said first maintaining means (6) into said release position;
- moving the elongate tubular part (100) relative to the mold body (2) so as to release the elongated tubular part (100) from the cavity (10) of the mold body (2);
- bringing said second maintaining means (7) into the release position, and
- moving the counter-mold (3) over a second displacement up to the said demolding position, so as to release the molded elongated tubular part (100) with respect to the counter-mold (3).

2. Method according to claim 1, **characterized in that** it comprises the steps consisting in:
- designing said first maintaining means (6) in such a way that they form, in the maintaining position, molding parts (6a) of said first end (102) of the tubular part (100); and
- during the molding of the part (100), and while these first maintaining means (6) are in the maintaining position, injecting synthetic material between the said mold parts (6a) so as to mold the said first end (102).

3. Method according to claim 2, **characterized in that**:
- said first maintaining means (6) are in the form of at least two parts (6) movable radially with respect to the axis of the tubular part (100) to be obtained, between said maintaining and releasing positions;
- said molding parts (6a) of these movable parts are arranged in such a way that, in the maintaining position, they jointly make it possible to mold said first longitudinal end (102) with a thread.

4. Method according to claim 1, **characterized in that** it comprises the steps consisting in:
- designing said second maintaining means in the form of at least two parts (7) movable radially relative to the axis of the tubular part (100) to be obtained, between said maintaining and releasing positions;
- designing these movable parts with molding parts of said second longitudinal end (103), arranged in such a way that, in the maintaining position, they jointly make it possible to mold said second longitudinal end (103) with a thread.

5. Mold (1) for implementing the method according to claim 1, comprising:
(i) a mold body (2) defining a cavity (10) in the shape of the outer face of the tubular part (100) to be obtained;
(ii) a counter-mold (3) comprising a mandrel (15) having the shape of the inner surface of the tubular piece (100) to be obtained, this counter-mold (3) being movable with respect to the mold body (2) between a molding position, in which it is engaged in said cavity (10), and a demolding position, in which it is out of this cavity (10); and
(iii) first means (6) for maintaining a first longitudinal end (102) of a tubular part (100) molded between said mold body (2) and said counter-mold (3), this first maintaining means (6) being movable between a maintaining position of this first longitudinal end (102) and a position for releasing the same longitudinal end; said first maintaining means (6) is located at the end of the cavity (10) of which the counter-mold (3) moves away when leaving said molding position to move towards said demolding position;
(iv) means for moving said first maintaining means (6) between said maintaining and releasing positions, and
(v) means for moving the counter-mold (3) relative to the mold body (2), making it possible to move the counter-mold (3) over a first movement in the direction of its demolding position, by moving this counter-mold (3) over a travel corresponding to about half the length of the tubular part (100), and then, after said first maintaining means (6) has been brought into said release position, moving the counter-mold (3) over a second displacement up to said demolding position;
**characterized in that** it comprises:
(i) second maintaining means (7), located at the second longitudinal end (103) of the tubular part (100) to be obtained, opposite to said first longitudinal end (102), these second maintaining means (7) being movable between a position for maintaining this second longitudinal end (103) and a position for releasing the same longitudinal end, and
(ii) means for moving said second maintaining means (7) between said maintaining and releasing positions.

6. The mold as claimed in claim 5, wherein said second maintaining means are in the form of at least two parts that are movable radially relative to the axis of the tubular piece to be obtained, between said maintaining and releasing positions, and comprise molding portions (7a) arranged such that, in the maintaining position of said movable parts (7), they jointly make it possible to mold said second longitudinal end (103) with a thread.

7. Mold (1) as claimed in claim 5 or claim 6, wherein the first maintaining means (6) are arranged in such a way that they form, in the maintaining position, molding parts (6a) for molding said first end (102) of the tubular part (100).

8. Mold (1) according to claim 7, **characterized in that**:
- said first maintaining means are in the form of at least two parts (6) which are movable radially with respect to the axis of the tubular part (100) to be obtained, between said maintaining and releasing positions;
- said molding parts (6a) of these movable parts (6) are arranged in such a way that, in the maintaining position, they jointly make it possible to mold said first longitudinal end (102) with a thread.
